Europäisches Patentamt

European Patent Office

Office européen des brevets

(11) Veröffentlichungsnummer: **0 480 130 A2**

## EUROPÄISCHE PATENTANMELDUNG

(21) Anmeldenummer: **91110033.7**

(51) Int. Cl.5: **B23H 1/00**

(22) Anmeldetag: **19.06.91**

(30) Priorität: **09.10.90 DE 4031977**

(43) Veröffentlichungstag der Anmeldung:
**15.04.92 Patentblatt 92/16**

(84) Benannte Vertragsstaaten:
**BE CH ES FR IT LI**

(71) Anmelder: **AEG-Elotherm GmbH**
**Hammesberger Strasse 31**
**W-5630 Remscheid-Hasten(DE)**

(72) Erfinder: **Stengel, Edgar**
**Erdelen Strasse 35**
**W-5630 Remscheid(DE)**

(74) Vertreter: **Patentanwaltsbüro Cohausz &**
**Florack**
**Schumannstrasse 97**
**W-4000 Düsseldorf 1(DE)**

(54) **Funkenerosionsmaschine.**

(57) Die Erfindung betrifft eine Funkenerosionsmaschine mit einem Ständer, der an seinem oberen Kragarm den Werkzeugkopf mit einer Aufnahme für die Bearbeitungselektrode trägt, mit einem Aufspanntisch für das zu bearbeitende Werkstück und einem darauf befestigten Behälter zur Aufnahme der dielektrischen Arbeitsflüssigkeit. Kennzeichen der Erfindung ist, daß an dem Rahmen stabförmige Elemente für ein Lichtgitter befestigt sind, welche Sender, Empfänger oder Spiegel tragen und von denen die beiden zur Bedienungsseite hin nächstliegenden aus einer vertikalen Arbeitsstellung in die unwirksame horizontale Lage umklappbar sind.

Fig. 2

EP 0 480 130 A2

Die Erfindung betrifft eine Funkenerosionsmaschine mit einem Ständer, der an seinem oberen Kragarm den Werkzeugkopf mit einer Aufnahme für die Bearbeitungselektrode trägt, mit einem Aufspanntisch für das zu bearbeitende Werkstück und einem darauf befestigten Behälter zur Aufnahme der dielektrischen Arbeitsflüssigkeit.

Eine derartige Funkenerosionsmaschine mit Faltenbalgbehälter zur Aufnahme der dielektrischen Flüßigkeit ist aus der DE-OS 38 20 686 bekannt. Die in Funkenerosionsmaschinen zu bearbeitenden Werkstücke werden wie bei anderen Werkzeugmaschinen auf einen Tisch aufgespannt. Zum Aufspannen, Ausrichten und Bearbeiten werden die Bearbeitungselektrode und das Werkstück relativ zueinander bewegt. Dabei können die Elektrode und/oder der Aufspanntisch bewegbar sein. Nach Beendigung der funkenerosiven Bearbeitung eines Werkstücks wird die dielektrische Flüssigkeit aus dem Faltenbalgbehälter abgelassen. Anschließend wird der Faltenbalgbehälter abgesenkt, möglichst unter die Aufspannfläche für das Werkstück, um die Zugänglichkeit zum Werkstück zu erleichtern.

Um die Unfallschutzbestimmungen zu erfüllen, muß die Funkenerosionsmaschine wie auch andere Werkzeugmaschinen mit Mitteln ausgetattet sein, die verhindern, daß eine Person unabsichtlich in die laufende Maschine gerät und sich Verletzungen zuzieht. Dazu sind u.a. Lichtgitter üblich, welche den Arbeitsbereich der Maschine umgeben und dafür sorgen, daß die Maschine automatisch stillgesetzt wird, wenn das Gitter, z.B. mit der Hand, durchquert wird. Die das Lichtgitter tragenden Elemente stören das ungehinderte Be- und Entladen der Maschine beim Wechsel eines Werkstücks. Es ist daher die Aufgabe der vorliegenden Erfindung, Mittel anzugeben, die die Erzeugung eines Lichtgitters bei laufendem Betrieb der Maschine sicherstellen, andererseits aber das Be- und Entladen der Maschine nicht behindern.

Zur Lösung dieser Aufgabe wird bei einer Funkenerosionsmaschine mit den gattungsgemäßen Merkmalen erfindungsgemäß vorgeschlagen, daß an dem Rahmen stabförmige Elemente für ein Lichtgitter befestigt sind, welche Sender, Empfänger oder Spiegel tragen und von denen die beiden zur Bedienungsseite hin nächstliegenden aus einer vertikalen Arbeitsstellung in die unwirksame horizontale Lage umklappbar sind. Bevorzugt sollen dabei die beiden vorderen stabförmigen Elemente Spiegel tragen. Sender und Empfänger können bei fixem Dielektrikumbehälter gemäß einer weiteren vorteilhaften Ausgestaltung der Erfindung an oder in der Rückwand der Maschine angeordnet sein, wenn sie nicht ebenfalls an stabförmigen Elementen angeordnet sind.

Die erfindungsgemäßen umklappbaren stabförmigen Elemente, die der Bedienungsseite am nächsten liegen, also die - von der Bedienungsperson aus gesehen - vorderen Stäbe, sind nach dem Ausschalten der Maschine umklappbar in eine horizontale Lage am Rahmen des Faltenbalgbehälters oder fixen Behälters, in der sie das Be- und Entladen des Werkstücks nicht behindern.

Ein Betrieb der Maschine ist nur bei vertikal aufgestellten stabförmigen Elementen möglich, wenn der über sie führende Lichtkreislauf geschlossen ist. Werden die stabförmigen Elemente - gewollt oder ungewollt - aus ihrer vertikalen Arbeitsstellung umgeklappt, wird die Lichtführung unterbrochen und dadurch die Maschine automatisch stillgesetzt. Ein unabsichtliches Einschalten der Maschine ohne funktionierendes Lichtgitter ist daher nicht möglich.

In der Zeichnung sind zwei Ausführungsbeispiele der Erfindung dargestellt.

Fig. 1 zeigt in perspektivischer Darstellung eine Maschine mit fixem Dielektrikumbehälter und

Fig. 2 die Perspektive einer Maschine mit Faltenbalgbehälter.

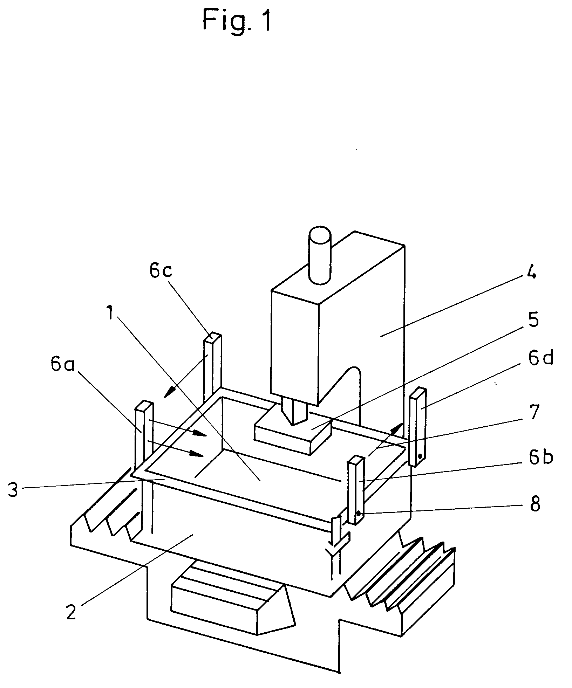

Die perspektivische Teilansicht der Funkenerosionsmaschine mit fixem Dielektrikumbehälter gemäß Fig. 1 läßt den Arbeitstisch 1 erkennen, den darauf aufgestellten Dielektrikumbehälter 2 mit oberem Rahmen 3, an deren Ständer 4 die Arbeitselektrode 5 angeordnet ist. An dem Rahmen 3 des Behälters 2 für die Aufnahme der dielektrischen Arbeitsflüssigkeit sind im dargestellten Ausführungsbeispiel vier stabförmige Elemente 6a bis 6d befestigt. Die beiden vorderen stabförmigen Elemente 6a und 6b sind aus der in ausgezogenen Linien dargestellten vertikalen Arbeitsstellung in die unwirksame oder Ruhestellung, die in strichpunktierten Linien angedeutet ist, umklappbar. Dabei legen sich die stabförmigen Elemente 6a, 6b an oder unter den Oberrand des Rahmens 3 und behindern so nicht das Auf- oder Abspannen eines Werkstücks auf den bzw. vom Arbeitstisch 1.

Die hinteren stabförmigen Elemente 6c, 6d können die Sender und Empfänger des Lichtgitters tragen und die vorderen stabförmigen Elemente 6a, 6b die Spiegel, über die die Lichtstrahlen von einem stabförmigen Element zum anderen geleitet werden. Sitzen beispielsweise die Sender in dem stabförmigen Element 6c, so gelangen die Lichtstrahlen 7 zu dem vorderen stabförmigen Element 6a, gehen dann von diesem zu dem nächsten vorderen stabförmigen Element 6b und werden von diesem umgelenkt zu dem hinteren stabförmigen Element 6d, welches die Empfänger trägt. Die klappbaren stabförmigen Elemente 6a, 6b sind um einen Zapfen 8 drehbar am Oberrand 3 des Faltenbalgbehälters 2 angebracht.

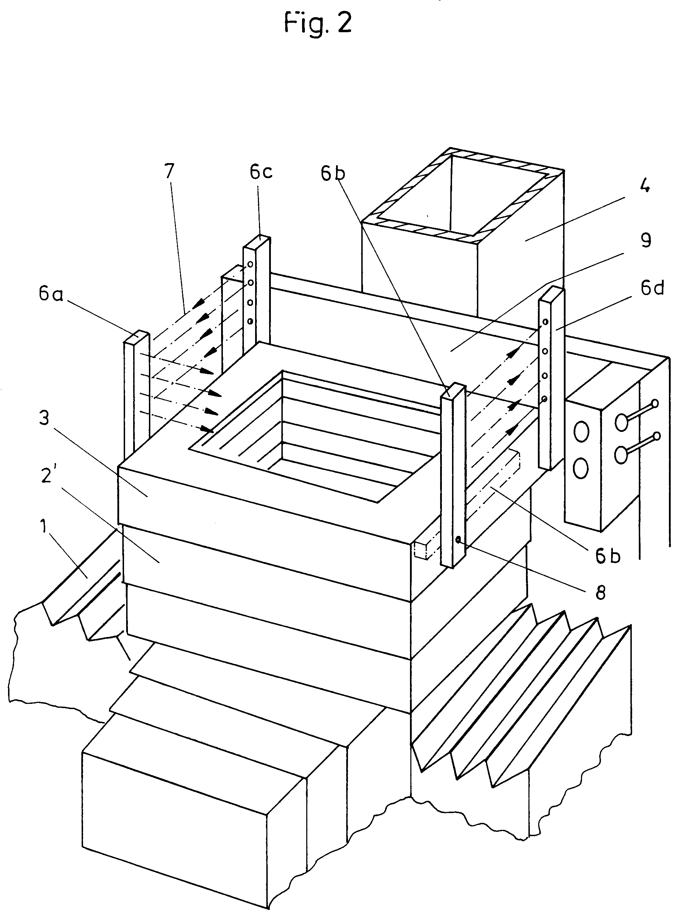

Bei der Ausführung gemäß Fig. 2 ist der Dielektrikumbehälter als Faltenbalgbehälter 2' ausgebildet. Bei dieser Ausgestaltung können die Sender und Empfänger auch an oder in der Rückwand 9 der Maschine angeordnet sein, wobei dann die hinteren Elemente 6c, 6d fehlen können.

**Patentansprüche**

1. Funkenerosionsmaschine mit einem Ständer, der an seinem oberen Kragarm den Werkzeugkopf mit einer Aufnahme für die Bearbeitungselektrode trägt, mit einem Arbeitstisch zum Aufspannen des zu bearbeitenden Werkstücks und mit einem darauf befestigten Behälter zur Aufnahme der dielektrischen Arbeitsflüssigkeit, **dadurch gekennzeichnet,** daß an dem Rahmen (3) stabförmige Elemente (6) befestigt sind, welche Sender, Empfänger oder Spiegel zum Erzeugen eines Lichtgitters (7) tragen, von denen die beiden zur Bedienungsseite hin nächstliegenden Elemente (6a, 6b) aus einer vertikalen Arbeitsstellung in die unwirksame horizontale Lage umklappbar sind.

2. Funkenerosionsmaschine nach Anspruch 1, **dadurch gekennzeichnet,** daß der Dielektrikumbehälter ein Faltenbalgbehälter mit höhenverstellbarem Rahmen und daran befestigten in vertikaler Richtung zieharmonikaartig faltbaren Wänden ist, deren unterer Rand dichtend am Aufspanntisch befestigt ist.

3. Funkenerosionsmaschine nach Anspruch 1, **dadurch gekennzeichnet,** daß die beiden vorderen stabförmigen Elemente (6a, 6b) Spiegel tragen.

4. Funkenerosionsmaschine nach einem der Ansprüche 1 oder 3, **dadurch gekennzeichnet,** daß die Sender und Empfänger an oder in der Rückwand (9) der Maschine angeordnet sind.

# Fig. 1

# Fig. 2